# EUROPEAN PATENT APPLICATION

(11) **EP 4 811 526 A1**
(43) Date of publication of application: **23.09.2026**
(21) Application number: 25902432.1
(22) Date of filing: 14.07.2025
(51) Int. Cl.: H01M 50/449

(54) **COATING SLURRY, SEPARATOR, PREPARATION METHOD FOR SEPARATOR, AND BATTERY**

(30) Priority: 10.12.2024 CN 202411806786
(71) Applicant: Shenzhen Senior Technology Material Co., Ltd., Shenzhen, Guangdong 518106 (CN)
(72) Inventor: CHEN, Weiyan, Shenzhen, Guangdong 518106 (CN); TAN, Bin, Shenzhen, Guangdong 518106 (CN); LIN, Yulin, Shenzhen, Guangdong 518106 (CN); QIAN, Cheng, Shenzhen, Guangdong 518106 (CN); LI, Qiuyi, Shenzhen, Guangdong 518106 (CN); QIANG, Li, Shenzhen, Guangdong 518106 (CN); GU, Jinhui, Shenzhen, Guangdong 518106 (CN); LV, Linlin, Shenzhen, Guangdong 518106 (CN)
(74) Representative: Loyer & Abello
(86) International application number: PCT/CN2025/108406
(87) International publication number: WO 2026/123675

(57) **Abstract**

The present application provides a coating slurry, a separator, a method for preparing the separator, and a battery. The separator includes a substrate and a coating layer provided on at least one surface of the substrate, where the coating layer includes fluorine-free polymer microspheres and a fluorine-free binder, a mass ratio of the fluorine-free polymer microspheres to the fluorine-free binder is (1 to 18):1, a melting point of the fluorine-free polymer microspheres is denoted as T, a glass transition temperature of the fluorine-free binder is denoted as Tg, and T and Tg satisfy the following relationship: 30 ≤ |T + Tg| ≤ 190. In the present application, the separator is capable of achieving relatively low-temperature pressing with positive and negative electrode sheets, and the separator exhibits high adhesion to the positive and negative electrode sheets, excellent interfacial bonding performance, as well as good air permeability, thermal stability, and resistance to electrolyte-injection-induced wrinkling.

## Description

### TECHNICAL FIELD

The present application relates to the technical field of lithium-ion batteries, for example, a coating slurry, a separator, a method for preparing the separator, and a battery.

### BACKGROUND

A separator is a polymer material used in a lithium-ion battery to separate a positive electrode and a negative electrode, and is one of the key components in the lithium-ion battery. The performance of the separator has a significant impact on battery safety, charge-discharge performance, and cycling performance. Therefore, the use of a high-performance separator is one of the approaches to improving the performance of lithium-ion batteries.

To improve the adhesion between the separator and the positive and negative electrode sheets, an adhesive coating is typically provided on a surface of a base film. Commonly used adhesive coatings mainly include fluorine-containing polymer coatings, such as polyvinylidene fluoride (PVDF). However, PVDF has a high melting point, is expensive, and is environmentally unfriendly due to the presence of fluorine. In addition, during battery production, even after relatively high-temperature pressing (hot pressing) the separator with the positive and negative electrode sheets under high temperature and high pressure, problems such as low adhesion and poor compaction still exist.

Therefore, developing a separator capable of being laminated with the positive and negative electrode sheets at a relatively low temperature and exhibiting high adhesion to the positive and negative electrode sheets is a problem to be urgently solved in the art.

### SUMMARY

The following provides an overview of the subject matter described in detail herein. This overview does not serve to limit the scope of the claims.

The present application provides a coating slurry, a separator, a method for preparing the separator, and a battery. The separator is capable of exhibiting high adhesion to the positive and negative electrode sheets, under relatively low-temperature pressing (cold pressing) with positive and negative electrode sheets, while having excellent interfacial bonding performance.

In a first aspect, the present application provides a separator, including a substrate and a coating layer provided on at least one surface of the substrate, where the coating layer comprises fluorine-free polymer microspheres and a fluorine-free binder, a mass ratio of the fluorine-free polymer microspheres to the fluorine-free binder is (1 to 18):1, a melting point of the fluorine-free polymer microspheres is denoted as T, a glass transition temperature of the fluorine-free binder is denoted as Tg, and T and Tg satisfy the following relationship: 30 ≤ |T + Tg| ≤ 190.

In the present application, the coating layer comprises the fluorine-free polymer microspheres and the fluorine-free binder at a specific mass ratio, and the melting point of the fluorine-free polymer microspheres and the glass transition temperature of the fluorine-free binder are controlled to satisfy a specific relationship, which enables the separator to achieve adhesion to the positive and negative electrode sheets at a relatively low temperature. Through the low-temperature adhesion, the air permeability uniformity between an inner layer and an outer layer of the battery separator is improved, making the separator less prone to pore clogging issues that occur under relatively high-temperature pressing conditions; meanwhile, the problems of a relatively loose wound core and inconsistent battery performance stability caused by uneven heat distribution during relatively high-temperature pressing are also avoided. Furthermore, the relatively low-temperature adhesion features low energy consumption and low cost. Moreover, during lamination, the fluorine-free polymer microspheres undergo softening and deformation, interlocking with positive and negative electrode interfaces. After completion of lamination, the microspheres harden to form an intermediate that connects the separator and the positive and negative electrode materials. The mechanical interlocking effect at the microsphere-electrode interfaces and van der Waals forces collectively endow excellent interfacial adhesion. Therefore, by compounding the fluorine-free polymer microspheres with the fluorine-free binder, relatively low-temperature pressing adhesion between the separator and the positive and negative electrode sheets can be improved, and the separator exhibits good air permeability, thermal stability, and resistance to electrolyte-injection-induced wrinkling.

In the present application, the mass ratio of the fluorine-free polymer microspheres to the fluorine-free binder is (1 to 18):1, where specific values within (1 to 18) may be, for example, 1, 1.5, 2, 2.5, 3, 3.5, 4, 4.5, 5, 5.5, 6, 6.5, 7, 7.5, 8, 8.5, 9, 9.5, 10, 10.5, 11, 11.5, 12, 12.5, 13, 13.5, 14, 14.5, 15, 15.5, 16, 16.5, 17, 17.5, and 18.

In the present application, specific values of |T + Tg| may be, for example, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, 180, 185, and 190, optionally 30 ≤ |T + Tg| ≤ 130.

In the present application, controlling T and Tg to satisfy the specific relationship is conducive to obtaining batteries that have improved performance, and reducing production energy consumption and cost.

In an embodiment, the melting point of the fluorine-free polymer microspheres ranges from 100 °C to 124 °C, which may be, for example, 100 °C, 101 °C, 102 °C, 103 °C, 104 °C, 105 °C, 106 °C, 107 °C, 108 °C, 109 °C, 110 °C, 111 °C, 112 °C, 113 °C, 114 °C, 115 °C, 116 °C, 117 °C, 118 °C, 119 °C, 120 °C, 121 °C, 122 °C, 123 °C, or 124 °C, optionally 105 °C to 120 °C.

During local infiltration of electrolyte into the separator, capillary action may cause the separator to bulge at a leading edge of liquid flow, thereby creating gaps between the separator and the electrode sheets. The electrolyte diffuses into the internal pores of the separator and the electrode sheets, and the expelled gas accumulates at the separator-electrode interfaces, forming bubbles, which lead to local deformation and wrinkling of the separator. In the present application, controlling the melting point of the fluorine-free polymer microspheres and the glass transition temperature of the fluorine-free binder to satisfy the specific relationship is conducive not only to improving the adhesion between the separator and the positive and negative electrode sheets, but also for achieving better resistance to electrolyte-injection-induced wrinkling during cell assembly.

In an embodiment, the fluorine-free polymer microspheres comprise polyethylene wax microspheres and/or modified polyethylene wax microspheres.

In an embodiment, the modified polyethylene wax microspheres comprise alkyl acrylate graft-modified polyethylene wax microspheres and/or alkyl methacrylate graft-modified polyethylene wax microspheres.

In an embodiment, in the modified polyethylene wax microspheres, main chains of alkyl groups of the alkyl acrylate and the alkyl methacrylate each independently contain one or more carbon atoms,, which may be, for example, 1, 2, 3, 4, 5, 6, 7, 8, 9, or 10; and optionally, the main chains of the alkyl groups each independently contain 3 or more carbon atoms.

In an embodiment, in the modified polyethylene wax microspheres, the alkyl acrylate comprises n-alkyl acrylate; and the alkyl methacrylate comprises n-alkyl methacrylate.

In the present application, optionally, the polyethylene wax microspheres are graft-modified with alkyl (meth)acrylate. By using alkyl (meth)acrylate to graft-modify the polyethylene wax microsphere, the melting point of the polyethylene wax microspheres can be regulated, thereby obtaining a separator with better adhesion performance. Optionally, alkyl (meth)acrylate with a short molecular chain length and low steric hindrance is used.

In an embodiment, the glass transition temperature of the fluorine-free binder ranges from -70 °C to 70 °C, which may be, for example, -70 °C, -68 °C, -66 °C, -64 °C, -62 °C, -60 °C, -58 °C, -56 °C, -54 °C, -52 °C, -50 °C, -48 °C, -46 °C, -44 °C, -42 °C, -40 °C, -35 °C, -30 °C, -25 °C, -20 °C, -15 °C, -10 °C, -5 °C, 0 °C, 5 °C, 10 °C, 15 °C, 20 °C, 25 °C, 30 °C, 35 °C, 40 °C, 45 °C, 50 °C, 55 °C, 60 °C, 65 °C, or 70 °C, optionally -70 °C to -4 °C.

In the present application, the glass transition temperature of the fluorine-free binder being within the above range is conducive to improving the adhesion between the separator and the positive and negative electrode sheets, and also can provide better resistance to electrolyte-injection-induced wrinkling during cell assembly. Moreover, in cases where the glass transition temperature is relatively low, the separator more readily undergoes molecular chain movement between the electrode sheets under relatively low-temperature pressing conditions, forming van der Waals forces, thereby enhancing the adhesion to the electrode sheets and improving the battery performance. However, the glass transition temperature should not be too low; otherwise, the low melting point of the binder results in poor heat shrinkage resistance of the separator.

In an embodiment, the fluorine-free binder comprises an alkyl acrylate binder and a modified product thereof, and/or an alkyl methacrylate binder and a modified product thereof.

In the present application, the alkyl acrylate binder and the alkyl methacrylate binder refer to alkyl acrylate polymers and alkyl methacrylate polymers, which may be homopolymers or copolymers. The term "and a modified product thereof" refers to an alkyl (meth)acrylate binder and/or a modified product thereof. The modified product is obtained by graft-modifying the alkyl (meth)acrylate binder, where side chains are grafted onto the molecular structure thereof to increase the length of the molecular side chains, for example, grafting long-chain groups such as butyl and octyl.

In an embodiment, the alkyl acrylate comprises at least one of ethyl acrylate, n-butyl acrylate, isobutyl acrylate, n-octyl acrylate, 2-hydroxyethyl acrylate, 2-hydroxypropyl acrylate, 2-ethylhexyl acrylate, and the like; and the alkyl methacrylate comprises hexyl methacrylate.

In an embodiment, in the alkyl acrylate binder or the alkyl methacrylate binder, a main chain of the alkyl group contains 5 or more carbon atoms.

In the present application, the alkyl (meth)acrylate in the modified polyethylene wax microspheres and the alkyl (meth)acrylate binder are not limited to the acrylate compounds mentioned in the above.

In the present application, the alkyl (meth)acrylate binder may be commercially available, or prepared in-house.

In the present application, when the alkyl (meth)acrylate binder is prepared, the Tg of the alkyl (meth)acrylate binder is related to the molecular chain length of the monomer, molecular steric hindrance, preparation method, and type of emulsifier. To obtain an alkyl (meth)acrylate binder with a relatively low Tg, monomers with high molecular chain flexibility, long molecular chains, and low steric hindrance may be selected; the preparation method may be performed by dropwise addition of mixed monomers. For example, when a pre-emulsification method is used, the high polydispersity of the emulsion system, i.e., a quantity of droplets increases and a diameter decreases, leads to a significant increase in the surface, which greatly enhances the influence of the emulsifier on intermolecular interaction forces and steric hindrance, resulting in an increase in Tg. Regarding the type of emulsifier, a nonionic emulsifier is optional. In cases where an anionic emulsifier is used, ionizable polar groups of the anionic emulsifier, such as sulfate, benzenesulfonate, phosphate, and maleate, can form hydrogen bonds with water, which increases the internal rotational activation energy of the molecules and intermolecular electrostatic repulsion, thereby causing an increase in the Tg of the polymer.

In an embodiment, the coating layer further comprises an inorganic material.

In an embodiment, a mass ratio of the inorganic material to the fluorine-free binder is (0 to 9):1, where specific values within (0 to 9) may be, for example, 0.01, 0.02, 0.05, 0.08, 0.1, 0.5, 1, 1.5, 2, 2.5, 3, 3.5, 4, 4.5, 5, 5.5, 6, 6.5, 7, 7.5, 8, 8.5, and 9.

In an embodiment, the inorganic material comprises at least one of alumina, boehmite, barium sulfate, calcium oxide, silicon carbide, or silica.

In an embodiment, a thickness of the coating layer ranges from 1.0 µm to 3 µm, which may be, for example, 1.0 µm, 1.2 µm, 1.4 µm, 1.5 µm, 1.6 µm, 1.8 µm, 2 µm, 2.2 µm, 2.4 µm, 2.6 µm, 2.8 µm, or 3 µm.

In an embodiment, a thickness of the substrate ranges from 3 µm to 16 µm, which may be, for example, 3 µm, 4 µm, 5 µm, 6 µm, 8 µm, 10 µm, 12 µm, 14 µm, or 16 µm.

In an embodiment, the substrate comprises at least one of a polypropylene substrate, a polyethylene substrate, and a multilayer composite substrate of polypropylene and polyethylene.

In a second aspect, the present application provides a coating slurry. By mass percentage, the coating slurry comprises 30% to 70% of fluorine-free polymer microspheres (which may be, for example, 30%, 35%, 40%, 45%, 50%, 55%, 60%, 65%, or 70%), 2% to 10% of a fluorine-free binder (which may be, for example, 2%, 2.5%, 3%, 3.5%, 4%, 4.5%, 5%, 5.5%, 6%, 6.5%, 7%, 7.5%, 8%, 8.5%, 9%, 9.5%, or 10%), and the balance of a solvent. A melting point of the fluorine-free polymer microspheres is denoted as T, and a glass transition temperature of the fluorine-free binder is denoted as Tg, where the T and Tg satisfy the following relationship: 30 ≤ |T + Tg| ≤ 190.

In an embodiment, the fluorine-free polymer microspheres satisfy at least one of the following conditions: (1) the melting point of the fluorine-free polymer microspheres ranges from 100 °C to 124 °C, which may be, for example, 100 °C, 101 °C, 102 °C, 103 °C, 104 °C, 105 °C, 106 °C, 107 °C, 108 °C, 109 °C, 110 °C, 111 °C, 112 °C, 113 °C, 114 °C, 115 °C, 116 °C, 117 °C, 118 °C, 119 °C, 120 °C, 121 °C, 122 °C, or 124 °C; (2) the fluorine-free polymer microspheres comprise at least one of polyethylene wax microspheres, alkyl acrylate graft-modified polyethylene wax microspheres, or alkyl methacrylate graft-modified polyethylene wax microspheres, where in the alkyl acrylate or the alkyl methacrylate, a main chain of the alkyl group contains one or more carbon atoms, which may be, for example, 1, 2, 3, 4, 5, 6, 7, 8, 9, or 10.

In an embodiment, the fluorine-free binder satisfies at least one of the following conditions: (1) The glass transition temperature of the fluorine-free binder ranges from -70 °C to 70 °C, which may be, for example, -70 °C, -68 °C, -66 °C, -64 °C, -62 °C, -60 °C, -58 °C, -56 °C, -54 °C, -52 °C, -50 °C, -48 °C, -46 °C, -44 °C, -42 °C, -40 °C, -35 °C, -30 °C, -25 °C, -20 °C, -15 °C, -10 °C, -5 °C, 0 °C, 5 °C, 10 °C, 15 °C, 20 °C, 25 °C, 30 °C, 35 °C, 40 °C, 45 °C, 50 °C, 55 °C, 60 °C, 65 °C, or 70 °C; (2) the fluorine-free binder comprises an alkyl acrylate binder and a modified product thereof, and/or an alkyl methacrylate binder and a modified product thereof, where the alkyl acrylate comprises at least one of ethyl acrylate, n-butyl acrylate, isobutyl acrylate, n-octyl acrylate, 2-hydroxyethyl acrylate, 2-hydroxypropyl acrylate, and 2-ethylhexyl acrylate; and the alkyl methacrylate comprises hexyl methacrylate.

In an embodiment, the solvent comprises at least one of water, acetone, ethanol, and N-methylpyrrolidone (NMP).

In an embodiment, by mass percentage, the coating slurry further comprises 0% to 67% of an inorganic material (which may be, for example, 0.1%, 0.2%, 0.5%, 1%, 5%, 10%, 15%, 20%, 25%, 30%, 35%, 40%, 45%, 50%, 55%, 60%, or 65%) and/or 0 % to 12% of an additive (which may be, for example, 0.06%, 0.08%, 0.1%, 0.5%, 1%, 2%, 4%, 6%, 8%, 10%, or 12%).

In the present application, the inorganic material in the coating slurry comprises at least one of alumina, boehmite, barium sulfate, calcium oxide, silicon carbide, or silica.

In an embodiment, the additive comprises a dispersant and/or a wetting agent.

In the present application, by mass percentage, the coating slurry comprises 0% to 10% of a dispersant (which may be, for example, 0.01%, 0.05%, 0.1%, 0.2%, 0.5%, 1%, 5%, or 10%) and 0% to 2% of a wetting agent (which may be, for example, 0.06%, 0.08%, 0.1%, 0.5%, 1%, or 2%).

In the present application, the coating slurry may further comprise, as needed, a leveling agent, a thickener, a suspending agent, or the like.

In a third aspect, the present application provides a method for preparing the separator according to the first aspect, where the preparing method includes: S1: providing a substrate; S2: preparing the coating slurry according to the second aspect and applying the coating slurry onto at least one surface of the substrate; and S3: drying the slurry at a temperature of 50 °C to 80 °C to obtain the separator.

In the present application, a method for preparing the coating slurry includes: uniformly mixing fluorine-free polymer microspheres, a fluorine-free binder, a solvent, and an optional inorganic material and additive, to obtain the coating slurry.

In a fourth aspect, the present application provides a battery, where the battery includes at least one of: (1) the separator according to the first aspect; (2) the separator prepared by the preparing method according to the third aspect; and (3) the coating layer prepared from the coating slurry according to the second aspect.

In the present application, the numerical ranges not only include the point values listed in the above, but also include any point values within the above numerical ranges that are not listed. Due to space limitations and for the sake of brevity, the present application does not exhaustively list all specific point values encompassed in the ranges.

Compared with the related technology, the present application has the following beneficial effects.

For the separator provided in the present application, the coating layer comprises the fluorine-free polymer microspheres and the fluorine-free binder at a specific mass ratio, and the melting point of the fluorine-free polymer microspheres and the glass transition temperature of the fluorine-free binder are controlled to satisfy a specific relationship, which enables the separator to achieve adhesion to the positive and negative electrode sheets at a relatively low temperature (25 °C to 60 °C), while improving the adhesion between the separator and the positive and negative electrode sheets, ensuring better resistance to electrolyte-injection-induced wrinkling during cell assembly. Moreover, the separator exhibits good air permeability and thermal stability, the cost is low, and the material is fluorine-free and environmentally friendly.

Other aspects will become apparent upon reading and understanding the drawing and the detailed description.

### BRIEF DESCRIPTION OF THE DRAWINGS

The drawing is used to provide a further understanding of the technical solutions of the present application and constitutes a part of the specification. The drawing, together with the embodiments of the present application, is used to explain the technical solutions of the present application and does not constitute a limitation on the technical solutions of the present application.

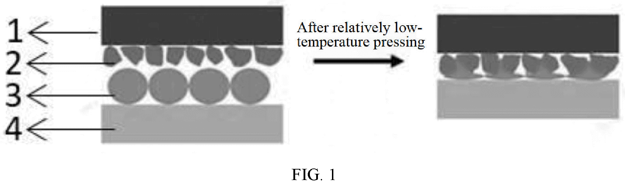

FIG. 1 is a schematic diagram of an interaction between polymer microspheres and a surface of a positive electrode sheet or a negative electrode sheet when a separator provided in the present application is cold-pressed with the positive electrode sheet or the negative electrode sheet.

In the drawing, 1-positive electrode sheet or negative electrode sheet; 2-powder particles on the surface of the positive electrode sheet or negative electrode sheet; 3-polymer microspheres in a coating layer; and 4-substrate.

### DETAILED DESCRIPTION OF THE EMBODIMENTS

The technical solutions of the present application are further illustrated below through specific embodiments. Those skilled in the art should understand that the embodiments are provided only to facilitate understanding of the present application and should not be construed as specific limitation to the present application.

The materials used in the present application may be commercially available or prepared by conventional methods. Unless otherwise specified, the materials used in the present application are as follows.

### Fluorine-free polymer microspheres

Polyethylene wax microspheres 1 (PE wax-1): melting point 110 °C, from Guangdong Advanced Carbon Materials Co., Ltd.
Polyethylene wax microspheres 2 (PE wax-2): melting point 105 °C, KAR-02 from Guangdong Advanced Carbon Materials Co., Ltd.
Polyethylene wax microspheres 3 (PE wax-3): melting point 118 °C, KAR-01 from Guangdong Advanced Carbon Materials Co., Ltd.
Polyethylene wax microspheres 4 (PE wax-4): melting point 95 °C, from Guangdong Advanced Carbon Materials Co., Ltd.
Polyethylene wax microspheres 5 (PE wax-5): melting point 125 °C, from Guangdong Advanced Carbon Materials Co., Ltd.

### Fluorine-free binders

n-Butyl acrylate binder: glass transition temperature -56 °C, purchased from Merck Life Science.
Isobutyl acrylate binder: glass transition temperature -4 °C, purchased from Macklin Chemical.
n-Butyl methacrylate binder: glass transition temperature 20 °C, purchased from Merck Life Science.
2-Ethylhexyl acrylate binder: glass transition temperature -70 °C, purchased from Merck Life Science.
Ethyl acrylate binder: glass transition temperature -22 °C, purchased from Merck Life Science.

In the present application, Tg and T can be measured by differential scanning calorimetry (DSC).

### Example 1

The present example provides a separator. The separator included a substrate (a polyethylene substrate with a thickness of 7 µm, from Shenzhen Senior Technology Material Co., Ltd.) and a coating layer (having a thickness of 2 µm) provided on one surface of the substrate. The coating layer comprised the polyethylene wax microspheres 1 (from Guangdong Advanced Carbon Materials Co., Ltd., T = 110 °C), the n-butyl acrylate binder, and boehmite (BG-601 from Anhui Estone Materials Technology Co., Ltd.), where the mass ratio of the polyethylene wax microspheres 1 to the n-butyl acrylate binder was 5:1, and the mass ratio of the boehmite to the n-butyl acrylate binder was 5:1.

The present example provides a method for preparing the separator, specifically including the following steps:
by mass percentage, mixing 35% of the polyethylene wax microspheres 1, 35% of boehmite, 7% of the n-butyl acrylate binder, 0.05% of the wetting agent (SY-190 from Guangdong Fangding New Materials Co., Ltd.), 0.05% of the dispersant (8823 from Shenzhen Yanyi New Materials Co., Ltd.), and 22.9% of deionized water uniformly to obtain the coating slurry; applying the coating slurry onto one surface of the substrate, followed by drying at 60 °C to obtain the separator.

In the present application, before and after relatively low-temperature pressing of the separator, the interaction between the polymer microspheres in the coating layer and the powder particles on the surface of the positive electrode sheet or negative electrode sheet is illustrated in FIG. 1. As shown in FIG. 1, under the relatively low-temperature pressing conditions, the polymer microspheres underwent softening and deformation, and mechanically interlocked with the positive (negative) electrode interface. After completion of relatively low-temperature pressing, the microspheres hardened, forming an intermediate that connected the separator and the positive (negative) electrode materials. The mechanical interlocking of the microspheres with the electrode sheet interface and van der Waals forces collectively endow excellent interfacial adhesion.

### Examples 2-8 and Comparative Examples 1-3

Examples 2-8 and Comparative Examples 1-3 each provide a separator and a battery. They were different from Example 1 only in the coating layer of the separator. The thickness of the coating layer, material type, the mass ratio of the fluorine-free polymer microspheres to the fluorine-free binder in the coating layer, the mass ratio of the inorganic material to the fluorine-free binder, and the absolute value of |T + Tg| are shown in Tables 1 to 2. In the tables, "/" indicates that the component was absent in the formulation, and "Δ" indicates that the component was present in the formulation. In the method for preparing the separator, the composition of the coating slurry was correspondingly adjusted according to differences in the coating layer (the contents of the solvent, the dispersant, and the wetting agent were kept constant, and the contents of the fluorine-free polymer microspheres, the acrylate binder, and the inorganic material were adjusted to satisfy the mass ratios shown in the tables). Others were identical to those in Example 1.

**Table 1**

| | | Example 1 | Example 2 | Example 3 | Example 4 | Example 5 | Example 6 |
|---|---|---|---|---|---|---|---|
| Thickness (µm) | | 2 | 1.8 | 2.7 | 2 | 2 | 2 |
| Fluorine-free polymer microspheres | PE wax-1, T = 110 °C | Δ | / | / | Δ | / | / |
| | PE wax-2, T = 105 °C | / | Δ | / | / | / | / |
| | PE wax-3, T = 118 °C | / | / | Δ | / | / | / |
| | PE wax-4, T = 95 °C | / | / | / | / | Δ | / |
| | PE wax-5, T = 125 °C | / | / | / | / | / | Δ |
| Poly(vinylidene fluoride-co-hexafluoropropylene), T = 172 °C | | / | / | / | / | / | / |
| Fluorine-free binders | n-Butyl acrylate binder, Tg = -56 °C | Δ | / | / | Δ | Δ | Δ |
| | 2-Ethylhexyl acrylate binder, Tg = -70 °C | / | Δ | / | / | / | / |
| | Ethyl acrylate binder, Tg = -22 °C | / | / | Δ | / | / | / |
| | Isobutyl acrylate binder, Tg = -4 °C | / | / | / | / | / | / |
| | n-Butyl methacrylate binder, Tg = 20 °C | / | / | / | / | / | / |
| IT + Tg\| (°C) | | 54 | 35 | 96 | 54 | 39 | 69 |
| Mass ratio of fluorine-free polymer microspheres to fluorine-free binder | | 5:1 | 4:1 | 3:1 | 15:1 | 5:1 | 5:1 |
| Inorganic material | Alumina | / | / | Δ | / | / | / |
| | Boehmite | Δ | Δ | / | Δ | Δ | Δ |
| Mass ratio of inorganic material to fluorine-free binder | | 5:1 | 6:1 | 7:1 | 9:1 | 5:1 | 5:1 |

**Table 2**

| | | Example 7 | Example 8 | Comparative Example 1 | Comparative Example 2 | Comparative Example 3 |
|---|---|---|---|---|---|---|
| Thickness (µm) | | 2 | 2 | 2 | 2 | 2 |
| Fluorine-free polymer microspheres | PE wax-1, T = 110 °C | Δ | Δ | / | / | Δ |
| | PE wax-2, T = 105 °C | / | / | / | / | / |
| | PE wax-3, T = 118 °C | / | / | / | / | / |
| | PE wax-4, T = 95 °C | / | / | / | Δ | / |
| | PE wax-5, T = 125 °C | / | / | / | / | / |
| Poly(vinylidene fluoride-co-hexafluoropropylene), T = 172 °C | | / | / | Δ | / | / |
| Fluorine-free binders | n-Butyl acrylate binder, Tg = -56 °C | / | / | Δ | / | Δ |
| | 2-Ethylhexyl acrylate binder, Tg = -70 °C | / | / | / | Δ | / |
| | Ethyl acrylate binder, Tg = -22 °C | / | / | / | / | / |
| | Isobutyl acrylate binder, Tg = -4 °C | Δ | / | / | / | / |
| | n-Butyl methacrylate binder, Tg = 20 °C | / | Δ | / | / | / |
| IT + Tg\| (°C) | | 106 | 130 | 116 | 25 | 54 |
| Mass ratio of fluorine-free polymer microspheres to fluorine-free binder | | 5:1 | 5:1 | 5:1 | 5:1 | 20:1 |
| Inorganic material | Alumina | / | / | / | / | / |
| | Boehmite | Δ | Δ | Δ | Δ | Δ |
| Mass ratio of inorganic material to fluorine-free binder | | 5:1 | 5:1 | 5:1 | 5:1 | 5:1 |

### Performance testing

(1) Relatively low-temperature pressing adhesion: The separator and the negative electrode sheet were cut into the same size, and then the separator and the negative electrode sheet were laminated and cold-pressed at 25 °C and 6.5 MPa for 60 s. The relatively low-temperature pressing adhesion between the separator and the negative electrode sheet was measured by stretching at a rate of 200 mm/min using a tensile tester.
(2) Relatively high-temperature pressing adhesion: The separator and the negative electrode sheet were cut into the same size, and then the separator and the negative electrode sheet were laminated and hot-pressed at 90 °C and 6.5 MPa for 60 s. The relatively high-temperature pressing adhesion between the separator and the negative electrode sheet was measured by stretching at a rate of 200 mm/min using a tensile tester.
   Herein, the negative electrode sheet was purchased from Guangdong Canrd New Energy Technology Co., Ltd.
(3) Air permeability increment: The air permeability of the separators and substrates provided in Examples 1-8 and Comparative Examples 1-3 was measured using an air permeability teste. The air permeability increment can be obtained by subtracting the air permeability of the substrate from that of the separator.
(4) Thermal shrinkage: The separators provided in Examples 1-8 and Comparative Examples 1-3 were cut into a size of 160mm×130 mm. A 100mm×100 mm square was drawn at the center of each separator. Five sheets of paper were placed above and below each separator. The separators were then placed in the oven at 130 °C for 1 hour, to measure the shrinkage rate in the machine direction (MD) of each separator.
(5) Resistance to electrolyte-injection-induced wrinkling: The separators provided in Examples 1-8 and Comparative Examples 1-3 were subjected to the cell assembly simulation (the positive and negative electrode sheets were purchased from Guangdong Canrd New Energy Technology Co., Ltd.), followed by injection of propylene carbonate. The assembled cells were left at room temperature for 5 days. The separators were then disassembled, and the quantity of wrinkles per square meter on the surface of the coating layer of the separator was observed and recorded. Ten parallel tests were conducted, and the average value was taken. Herein, a wrinkle with a length greater than 1 cm was counted as one wrinkle, and a wrinkle less than or equal to 1 cm was deemed as no wrinkle.

The specific test results are shown in Table 3.

**Table 3**

| | Relatively low-temperat ure pressing adhesion (N/m) | Relatively high-tempera ture pressing adhesion (N/m) | Air permeability increment (s) | Thermal shrinkage rate (%) | Resistance to electrolyte-injection-induced wrinkling (quantity of wrinkles) |
|---|---|---|---|---|---|
| Example 1 | 10 | 19 | 7 | 0.3 | 0 |
| Example 2 | 9 | 18 | 7.3 | 0.28 | 0 |
| Example 3 | 8 | 17 | 7.5 | 0.25 | 1 |
| Example 4 | 6 | 13 | 7 | 3.5 | 1 |
| Example 5 | 13 | 20 | 50 | 0.5 | 0 |
| Example 6 | 5 | 12 | 7 | 0.3 | 2 |
| Example 7 | 8.2 | 17.2 | 7.1 | 0.3 | 0 |
| Example 8 | 4 | 11 | 7.3 | 0.3 | 2 |
| Comparative Example 1 | 2.5 | 7.6 | 8.9 | 0.32 | 4 |
| Comparative Example 2 | 10.5 | 20.5 | 50.6 | 0.6 | 0 |
| Comparative Example 3 | 7 | 14 | 7.9 | 4 | 1 |

As shown in Table 3, for the separator provided in the present application, the coating layer comprises the fluorine-free polymer microspheres and the fluorine-free binder at a specific mass ratio, the melting point of the fluorine-free polymer microspheres and the glass transition temperature of the fluorine-free binder are controlled to satisfy a specific relationship, which enables the separator to achieve adhesion to the positive and negative electrode sheets at relatively low temperatures, while improving the adhesion between the separator and the positive and negative electrode sheets, ensuring better resistance to electrolyte-injection-induced wrinkling during cell assembly, and guaranteeing good air permeability and thermal stability of the separator. The relatively low-temperature pressing adhesion of the separator ranged from 4 N/m to 13 N/m, or even 8 N/m to 13 N/m. The relatively high-temperature pressing adhesion of the separator ranged from 11 N/m to 20 N/m, or even 17 N/m to 20 N/m. The air permeability increment ranged from 7 s to 50 s, the thermal shrinkage rate ranged from 0.25% to 3.5%, and the quantity of wrinkles per square meter ranged from 0 to 2.

As can be seen from Comparative Example 1, replacing the fluorine-free polymer microspheres with the fluoropolymer resulted in a separator with low relatively low-temperature pressing adhesion and relatively high-temperature pressing adhesion, which are far from the target adhesion, and poor resistance to electrolyte-injection-induced wrinkling. As can be seen from Comparative Examples 2 and 3, when the T of the fluorine-free polymer microspheres and the Tg of the fluorine-free binder did not satisfy the specific relationship, or when the mass ratio of the fluorine-free polymer microspheres to the fluorine-free binder was outside the range, the resulting separator exhibited a high thermal shrinkage rate.

The applicant declares that the above-mentioned constitute only specific embodiments of the present application, but the scope of protection of the present application is not limited thereto. Those skilled in the art should understand that any modifications or substitutions easily conceived within the technical scope disclosed in the present application fall within the protection scope and disclosure scope of the present application.

## Claims

1. A separator, comprising a substrate and a coating layer provided on at least one surface of the substrate, wherein the coating layer comprises fluorine-free polymer microspheres and a fluorine-free binder;
a mass ratio of the fluorine-free polymer microspheres to the fluorine-free binder is (1 to 18):1; and
a melting point of the fluorine-free polymer microspheres is denoted as T, a glass transition temperature of the fluorine-free binder is denoted as Tg, and T and Tg satisfy a relationship as follows: $30 \leq \left|T+Tg\right| \leq 190 .$

2. The separator according to claim 1, wherein the melting point of the fluorine-free polymer microspheres ranges from 100 °C to 124 °C, optionally from 105 °C to 120 °C.

3. The separator according to claim 1 or 2, wherein the fluorine-free polymer microspheres comprise polyethylene wax microspheres and/or modified polyethylene wax microspheres.

4. The separator according to claim 3, wherein the modified polyethylene wax microspheres comprise alkyl acrylate graft-modified polyethylene wax microspheres and/or alkyl methacrylate graft-modified polyethylene wax microspheres.

5. The separator according to claim 4, wherein in the modified polyethylene wax microspheres, main chains of alkyl groups of the alkyl acrylate and the alkyl methacrylate each independently contain one or more carbon atoms, and optionally, the main chains of the alkyl groups each independently contain 3 or more carbon atoms.

6. The separator according to any one of claims 1 to 5, wherein the glass transition temperature of the fluorine-free binder ranges from -70 °C to 70 °C, optionally from -70 °C to -4 °C.

7. The separator according to any one of claims 1 to 6, wherein the fluorine-free binder comprises an alkyl acrylate binder and a modified product thereof, and/or an alkyl methacrylate binder and a modified product thereof;
optionally, the alkyl acrylate comprises at least one of ethyl acrylate, n-butyl acrylate, isobutyl acrylate, n-octyl acrylate, 2-hydroxyethyl acrylate, 2-hydroxypropyl acrylate, or 2-ethylhexyl acrylate; and the alkyl methacrylate comprises hexyl methacrylate; and
optionally, in the alkyl acrylate binder or the alkyl methacrylate binder, a main chain of the alkyl group contains 5 or more carbon atoms.

8. The separator according to any one of claims 1 to 7, wherein the coating layer further comprises an inorganic material;
optionally, a mass ratio of the inorganic material to the fluorine-free binder is (0 to 9):1; and
optionally, the inorganic material comprises at least one of alumina, boehmite, barium sulfate, calcium oxide, silicon carbide, or silica.

9. The separator according to any one of claims 1 to 8, wherein a thickness of the coating layer ranges from 1.0 µm to 3 µm;
optionally, a thickness of the substrate ranges from 3 µm to 16 µm; and
optionally, the substrate comprises at least one of a polypropylene substrate, a polyethylene substrate, or a multilayer composite substrate of polypropylene and polyethylene.

10. A coating slurry, wherein by mass percentage, the coating slurry comprises 30% to 70% of fluorine-free polymer microspheres, 2% to 10% of a fluorine-free binder, and a balance of a solvent; and
a melting point of the fluorine-free polymer microspheres is denoted as T, a glass transition temperature of the fluorine-free binder is denoted as Tg, wherein the T and the Tg satisfy a following relationship: $30 \leq \left|T+Tg\right| \leq 190 .$

11. The coating slurry according to claim 10, wherein the fluorine-free polymer microspheres satisfy at least one of following conditions:
(1) the melting point of the fluorine-free polymer microspheres ranges from 100 °C to 124 °C;
(2) the fluorine-free polymer microspheres comprise at least one of polyethylene wax microspheres, alkyl acrylate graft-modified polyethylene wax microspheres, or alkyl methacrylate graft-modified polyethylene wax microspheres.

12. The coating slurry according to claim 10, wherein the fluorine-free binder satisfies at least one of following conditions:
(1) the glass transition temperature of the fluorine-free binder ranges from -70 °C to 70 °C;
(2) the fluorine-free binder comprises an alkyl acrylate binder and a modified product thereof, and/or an alkyl methacrylate binder and a modified product thereof;
the alkyl acrylate comprises at least one of ethyl acrylate, n-butyl acrylate, isobutyl acrylate, n-octyl acrylate, 2-hydroxyethyl acrylate, 2-hydroxypropyl acrylate, and 2-ethylhexyl acrylate; and the alkyl methacrylate comprises hexyl methacrylate.

13. The coating slurry according to claim 10, wherein the solvent comprises at least one of water, acetone, ethanol, and N-methylpyrrolidone;
optionally, by mass percentage, the coating slurry further comprises 0% to 67% of an inorganic material and/or 0% to 12% of an additive; and
optionally, the additive comprises a dispersant and/or a wetting agent.

14. A method for preparing the separator according to any one of claims 1 to 9, comprising:
S1: providing the substrate;
S2: preparing the coating slurry according to any one of claims 10 to 13 and applying the coating slurry onto at least one surface of the substrate; and
S3: drying the slurry at a temperature of 50 °C to 80 °C to obtain the separator.

15. A battery, comprising at least one of:
(1) the separator according to any one of claims 1 to 9;
(2) the separator prepared by the method according to claim 14; or
(3) a coating layer prepared from the coating slurry according to any one of claims 10 to 13.
